# EUROPÄISCHE PATENTSCHRIFT

(11) **EP 0 375 994 B1**
(45) Veröffentlichungstag und Bekanntmachung des Hinweises auf die Patenterteilung: **16.03.1994**
(21) Anmeldenummer: 89122264.8
(22) Anmeldetag: 02.12.1989
(51) Int. Cl.: C08G 77/60

(54) **Verfahren zur Herstellung von Polycarbosilanen und neue Polycarbosilane**
Process for preparing polycarbosilanes; polycarbosilanes obtained by this process
Procédé de préparation de polycarbosilanes; polycarbosilanes obtenus par ledit procédé

(30) Priorität: 08.12.1988 DE 3841348
(43) Veröffentlichungstag der Anmeldung: 04.07.1990
(73) Patentinhaber: Kali-Chemie Aktiengesellschaft, D-30173 Hannover (DE)
(72) Erfinder: Sartori, Peter, D-4134 Rheinberg 4 (DE); van Aefferden, Baudouin, D-4100 Duisburg 1 (DE); Habel, Wolfgang, D-4000 Düsseldorf 30 (DE)
(74) Vertreter: Lauer, Dieter, Dr.

(56) Entgegenhaltungen:
- DE-A- 847 594
- DE-A- 1 445 198
- GB-A- 896 301
- US-A- 3 431 221
- Noll, Chemie und Technologie der Silicone, publ. 1968, S. 42 und 317
- J.W.Curry and G.W.Harrison, Journal of Organic Chemistry,23, July-Dec 1958 pp1219-1220
- J.W.Curry, Journal of the American Chemical Society,78,(1956), pp1686-1689
- H-G.Elias, Neue polymere Werkstoffe für die industrielle Anwendung,(1983), S.362-363
- Encyclopedia of Polymer Science and Technology, vol.13,317-324 und 340-344

## Beschreibung

Die Erfindung bezieht sich auf ein neues Verfahren zur Herstellung von Polycarbosilanen und auf neue Polycarbosilane.

Polycarbosilane sind Polymere mit einer Gerüststruktur aus den Elementen Kohlenstoff und Silicium, in denen im allgemeinen Si-Gruppen und Kohlenwasserstoffgruppen alternierend vorliegen. Die Gerüststruktur solcher Polycarbosilane besteht z.B. aus wiederkehrenden Struktureinheiten der Formel 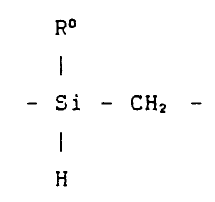
worin R⁰ z.B einen Kohlenwasserstoff-Substituenten darstellt.

Die bekannten Herstellungsverfahren für Polycarbosilane schließen zwei Arten ein, von denen das eine von Monosilanen wie z.B. Tetramethylsilan, Trimethylchlorsilan, Dimethyldichlorsilan oder Methyltrichlorsilan ausgeht, die durch thermische Zersetzung in Gemische verschiedener Polycarbosilane überführt werden, indem man die Monosilane auf Temperaturen von ca. 700°C erhitzt und die Pyrolyseprodukte nach kurzer Zeit aus der Reaktionszone entfernt und abkühlt. Es entstehen dann bevorzugt Verbindungen mit Si-C-Si-Gerüst, wobei der Anteil höhermolekularer Verbindungen im Pyrolysegemisch mit steigender Temperatur und längerer Verweildauer in der Reaktionszone zunimmt; die durch dieses Verfahren hergestellten Produkte sind jedoch sehr uneinheitlich und niedermolekular.

Bei dem anderen bekannten Verfahren zur Herstellung von Polycarbosilanen geht man von Polysilanen aus, die pyrolytisch bei Temperaturen von 350 bis 450°C in das Polycarbosilan überführt werden. Bei diesem Verfahren ist es notwendig, daß im eingesetzten Polysilan mindestens einer der beiden Substituenten am Silicium-Atom eine Methylgruppe ist, aus der während der thermischen Umwandlung eine Methylengruppe gebildet wird, die zwischen zwei benachbarte Si-Atome insertiert, und wobei ein Wasserstoff-Atom am Silicium-Atom verbleibt. Nach diesem Verfahren können immer nur solche Polycarbosilane erhalten werden, bei denen die Silicium-Atome in der Polycarbosilankette nur durch Methylenbrücken verknüpft sein können und die am Silicium-Atom immer nur einen beliebigen Substituenten R⁰ tragen können, während der zweite Substituent immer Wasserstoff ist.

Die für das letztgenannte Verfahren einzusetzenden Polysilane werden durch Kondensation von substituierten Methyldihalogensilanen in Gegenwart von Alkalimetallen erhalten. Die Pyrolyse solcher Polysilane führt zu uneinheitlichen Polycarbosilanen, oder andere wünschenswerte Produkte lassen sich nicht erhalten; z.B. solche, die am Silicium-Atom statt des Wasserstoff-Atoms einen zweiten Substituenten tragen, oder solche die eine andere Kohlenstoffbrücke als die Methylenbrücke zwischen den Si-Atomen aufweisen. Bei der Pyrolyse kommt es zum Teil auch zur Zersetzung des bereits gebildeten Polycarbosilans unter Bildung von mehr oder weniger leicht flüchtigen Produkten, die im Polycarbosilan selbst aber unerwünscht sind.

Für die Herstellung eines Polycarbosilans mit überlegener thermischer Stabilität und Oxidationsbeständigkeit und einem hohen Restgewichtsverhältnis beim Pyrolysieren in einer nicht-oxidierenden Atmosphäre durch bekannte Verfahren ist die Verwendung eines Druckreaktionsgefäßes, z.B eines Autoklaven, oder einer Apparatur vom Zirkulationstyp, die ein Zurückführen in den Kreislauf erlaubt, notwendig. Im Falle eines Verfahrens, bei dem ein Druckreaktionsgefäß verwendet wird, muß die Reaktion 10 bis 15 Stunden lang bei einer Temperatur von 400 bis 470°C unter einem Druck von 81 bis 111 bar durchgeführt werden, und es ist unbedingt notwendig eine druckbeständige Ausrüstung vorzusehen und Maßnahmen gegen die Brandgefahr zu ergreifen. Dieses Verfahren hat den weiteren Nachteil das es für eine Massenproduktion nicht geeignet ist. Im Falle eines Verfahrens, bei dem eine Apparatur vom Zirkulationstyp verwendet wird, ist es notwendig, eine Apparatur zu verwenden, die einen Hitzereaktionsturm, einen Produktabtrennungsturm usw. enthält, und niedermolekulare Produkte müssen zur Wiederholung der Reaktion zwingend im Kreislauf zum Hitzereaktionsturm zurückgeführt werden. Daher muß dieTemperatur in hohen Maße, auf 600 bis 800°C, gesteigert werden, und es muß eine lange Reaktionszeit, 20 bis 50 h, angewendet werden. Das letztgenannte Verfahren weist daher in industrieller Hinsicht viele Nachteile auf.

Aus der DE-OS 36 34 281 sind Polycarbosilane bekannt, bei denen die Si-Atome durch Brücken aus organischen aromatischen oder vorzugsweise heteroaromatischen Resten wie Pyrrol-2,5-diyl oder Thiophen-2,5-diyl verbunden sind. Ziel ist hierbei, nach zusätzlicher chemischer oder elektrochemischer Dotierung leitfähige Polysilane herzustellen.

Nach Schilling und Williams (Schilling, C.L.,Jr.; Williams, T.C. (Union Carbide Corp., Tarrytown, NY USA). Report 1983, TR-83-2; Order No. AD-A141558, 15 pp. (Eng). Avail. NTIS. From Gov. Rep. Announce. Index (U.S.) 1984, 84(18), 48; siehe auch Chemical Abstracts 101: 196821q) ist es bekannt, Copolymere aus Silanmonomereinheiten und Olefineinheiten in Gegenwart von Kalium in Tetrahydrofuran herzustellen. Als Silanmonomere werden Methyltrichlorsilan, Dimethyldichlorsilan oder Methyldichlorhydrosilan mit Styrol oder Isopren umgesetzt, wobei im Falle von Styrol die Si-Einheiten durch phenylsubstituierte Ethyleneinheiten verknüpft sind. Im Falle von Isopren sind die Si-Einheiten durch die entsprechende methylsubstituierte C₄ -Alkylenkette, welche noch eine Doppelbindung aufweist, verknüpft. In zwei weiteren Beispielen wird Isopren mit Methylchlormethyldichlorsilan bzw. mit einem Gemisch aus Vinylmethyldichlorsilan und Trimethylchlorsilan umgesetzt.

Aus der GB-PS 8 96 301 ist die Herstellung von Polycarbosilanen mit Chlorphenyl-Endgruppen, aromatischen Substituenten und aromatischen Brückengliedern nach einer Wurtz-Fitting-Reaktion bekannt. Trotz langer Reaktionszeiten erzielt man hierbei nur Ausbeuten um 50 %.

Die US-PS 3431221 beschreibt ebenfalls die Herstellung von Polycarbosilanen mit aromatischen Brückengliedern nach einer Wurtz-Fitting-Reaktion, wobei zur Verbesserung der Ausbeute ein Katalysator eingesetzt wird.

Aus der DE-PS 8 47 594 ist ein Verfahren zur Herstellung von flüssigen Polycarbosilanen mit Methylenbrückengliedern bekannt, hierbei ist es jedoch erforderlich, die Ausgangssubstanzen durch ein mehrstufiges Verfahren herzustellen.

Nach J.W. Curry et al, Journal of Org. Chem., 23, (1958) S. 1219 - 1220 und J.W. Curry, Journal of the American Chem. Soc. 78 (1956) S. 1686 - 1689 ist die Herstellung von Polysilanen mit aliphatischen Brückengliedern durch Polymerisation von Silanen in Gegenwart eines Platinkatalysators bekannt.

All diesen genannten Verfahren ist gemeinsam, daß die Verfahrensabläufe umständlich sind, daß die Polycarbosilane durch Pyrolyse der Polysilane hergestellt werden müssen, daß die Wahl der Substituenten nicht in weiten Grenzen variierbar ist, und daß die Ausbeuten häufig gering sind und nur unter Zuhilfenahme von Katalysatoren verbessert werden können.

Aufgabe der vorliegenden Erfindung ist es, ein Verfahren anzugeben, welches es gestattet, in einfacher Weise Polycarbosilane auf nicht-pyrolytischem Wege gezielt und schonend mit hoher Reinheit (z.B. Abwesenheit niedermolekularer thermischer Zersetzungsprodukte) und mit in weiten Grenzen variierbaren Substituenten und gesättigten Kohlenwasserstoffbrücken herzustellen, sowie neue nach diesem Verfahren herstellbare Polycarbosilane mit vorteilhaften Eigenschaften bereitzustellen.

Die Aufgaben werden gelöst durch das erfindungsgemäße Verfahren und die erfindungsgemäßen Polycarbosilane.

Die Erfindung betrifft ein Verfahren zur Herstellung von Polycarbosilanen auf Basis von Struktureinheiten der allgemeinen Formel I, 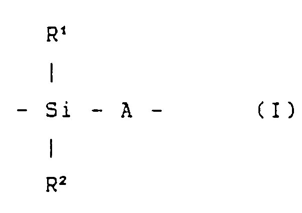
worin
- R¹: für Wasserstoff, Alkyl, Cycloalkyl, Aryl oder Arylalkyl steht, wobei R¹ in verschiedenen Einheiten ein und desselben Polycarbosilans auch unterschiedliche Bedeutung besitzen kann,
- R²: für Alkyl, Cycloalkyl, Aryl oder Arylalkyl steht, wobei R² in verschiedenen Einheiten ein und desselben Polycarbosilans auch unterschiedliche Bedeutung besitzen kann, und
- A: für einen geradkettigen oder verzweigten Alkylen-Rest oder für einen Cycloalkylen-Rest steht, wobei A in verschiedenen Einheiten ein und desselben Polycarbosilans auch unterschiedliche Bedeutung besitzen kann,
durch Umsetzung wenigstens eines Dihalogensilans der allgemeinen Formel II, 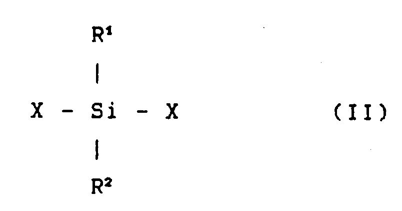
worin
- R¹ und R²: die oben angegebene Bedeutung besitzen und
- X: für Halogen, vorzugsweise für Chlor oder Brom, steht,
mit wenigstens einem Dihalogenkohlenwasserstoff der allgemeinen Formel III,

Y - A - Y (III)

worin
- A: die oben angegebene Bedeutung besitzt und
- Y: für die Halogene Chlor, Brom oder Jod, vorzugsweise für Chlor oder Brom, steht,
in Gegenwart eines Alkalimetalles.

Erfindungsgemäß werden zur Herstellung von Polycarbosilanen auf Basis von Struktureinheiten der allgemeinen Formel I wenigstens ein Dihalogensilan der allgemeinen Formel II mit wenigsten einem gesättigten Dihalogenkohlenwasserstoff der allgemeinen Formel III in Gegenwart eines Alkalimetalles in einem inerten organischen flüssigen Medium miteinander umgesetzt.

In der allgemeinen Formel II der eingesetzten Dihalogensilane kann R¹ Wasserstoff sein. R² steht dann für Alkyl, Cycloalkyl, Aryl oder Arylalkyl.

In der allgemeinen Formel II der eingesetzten Dihalogensilane können einer oder beide Reste R¹ oder R² für Alkyl stehen; Alkyl besitzt hierbei die Bedeutung eines gesättigten oder ungesättigten, geradkettigen oder verzweigten Alkylrestes, der gegebenenfalls durch inerte Reste weiter substituiert sein kann. Beispiele für geeignete Alkylreste sind C1- bis C16-Alkylreste, wie z.B. Methyl, Ethyl, Propyl, Butyl, Pentyl, Hexyl, Octyl, Dodecyl, Hexadecyl, Isopropyl, Isobutyl, Tertiärbutyl oder Allyl, insbesondere aber C1- bis C6-Alkylreste, vorzugsweise niedrige Alkylreste mit 1 bis 4 C-Atomen. Die voranstehnde Aufzählung ist weder einschränkend noch abschließend.

In der allgemeinen Formel II der eingesetzten Dihalogensilane können einer oder beide Reste R¹ oder R² für Cycloalkyl stehen; Cycloalkyl steht hierbei mit der Bedeutung eines gesättigten oder ungesättigten, gegebenenfalls durch inerte Reste weiter substituierten Cycloalkylrestes. Beispiele für Cycloalkyl sind Cyclopentyl, Cyclohexyl oder Cyclopentenyl, Cyclohexenyl. Die voranstehende Aufzählung ist weder einschränkend noch abschließend.

In der allgemeinen Formel II der eingesetzten Dihalogensilane können einer oder beide Reste R¹ oder R² für Aryl stehen; Aryl steht hierbei mit der Bedeutung eines unsubstituierten oder inert substituierten aromatischen Kohlenwasserstoffrestes. Beispiele für Aryl sind Phenyl, Naphthyl, p-Diphenyl, oder Alkylarylgruppen wie Tolyl, Ethylphenyl oder Propylphenyl. Die voranstehende Aufzählung ist weder einschränkend noch abschließend.

In der allgemeinen Formel II der eingesetzten Dihalogensilane können einer oder beide Reste R¹ oder R² für Arylalkyl stehen; Beispiele für Arylalkylgruppen sind Phenylmethyl oder Phenylethyl. Die voranstehende Aufzählung ist weder einschränkend noch abschließend.

Als Dihalogensilane eignen sich für das erfindungsgemäße Verfahren insbesondere die Dichlor- oder Dibromsilane. Beispiele für besonders geeignete Dihalogensilane sind Dimethyldichlorsilan, Dimethyldibromsilan, Diethyldichlorsilan, Diethyldibromsilan, Methylphenyldichlorsilan, Methylphenyldibromsilan, Diphenyldichlorsilan oder Diphenyldibromsilan. Die vorstehende Aufzählung ist weder einschränkend noch abschließend.

In der allgemeinen Formel III der eingesetzten gesättigten Dihalogenkohlenwasserstoffe kann A für einen geradkettigen oder verzweigten Alkylenrest stehen; vorteilhaft sind C₁ - bis C₆-Alkylen-Reste, insbesondere niedere Alkylreste mit 1 bis 4 C-Atomen wie z.B. Methylen, Ethylen, Trimethylen, Propylen oder Butylen; die voranstehende Aufzählung ist aber weder einschränkend noch abschließend.

In der allgemeinen Formel III der eingesetzten gesättigten Dihalogenkohlenwasserstoffe kann A für einen Cycloalkylen-Rest stehen; vorteilhaft sind C₄ - bis C₇-Cycloalkylen-Reste, wie Cyclopentylen oder Cyclohexylen. Die voranstehende Aufzählung ist aber weder einschränkend noch abschließend.

Als Dihalogenkohlenwasserstoffe eignen sich für das erfindungsgemäße Verfahren insbesondere gesättigte Dijod-, Dibrom- oder Dichlorkohlenwasserstoffe. Beispiele für besonders geeignete gesättigte Dihalogenkohlenwasserstoffe sind Methylenchlorid, Methylenbromid, 1,2-Dichlorethan, 1,2-Dibromethan, 1,3-Dichlorpropan, 1,3-Dibrompropan, 1,3-Dijodpropan, 1,2-Dibrompropan, Dichlorcyclopentan oder Dichlorcyclohexan. Die voranstehende Aufzählung ist weder einschränkend noch abschließend.

Das im erfindungsgemäßen Verfahren anwendbare Alkalimetall kann beispielsweise Lithium, Natrium oder Kalium sein. Das bevorzugte Alkalimetall ist Natrium, da es im allgemeinen die höchsten Ausbeuten an Polycarbosilanen ergibt und am wenigsten zu Nebenreaktionen führt. Zur Sicherstellung einer vollständigen Umsetzung wird ein Arbeiten mit einem geringen Überschuß an Alkalimetall bevorzugt. Die Menge des zu verwendenden Alkalimetalls beträgt etwa 2,2 Mol pro Mol aller eingesetzten Dihalogenverbindungen, d.h. für die Umsetzung von 1 Mol Dihalogensilan mit 1 Mol Dihalogenkohlenwasserstoff werden letztlich ca. 4,4 Mol Alkalimetall benötigt.

Das organische flüssige Medium, in welchem die Reaktion stattfindet, kann ein beliebiges mit Alkalimetallen verträgliches Lösungsmittel sein, in dem die als Reaktanden verwendeten Dihalogensilane und Dihalogenkohlenwasserstoffe löslich sind. Vorzugsweise ist dieses organische, flüssige Medium auch ein Lösungsmittel für die nach dem erfindungsgemäßen Verfahren herzustellenden Polycarbosilane. Geeignete Lösungsmittel können z.B. Kohlenwasserstoffe, wie Toluol, Xylol oder Paraffine, Ether wie Tetrahydrofuran oder Dioxan, Alkylenglykolether, z.B. Ethylenglykolether, wie Diethylenglykoldialkylether, Propylenglykolether, Polyethylenglykolether oder Polypropylenglykolether, aber auch stickstoffhaltige Lösungsmittel wie Ethylendiamin oder deren Gemische sein. Vorteilhaft werden solche Lösungsmittel verwendet, deren Siedetemperatur oberhalb des Schmelzpunktes des eingesetzten Alkalimetalles liegt. Ein bevorzugtes Lösungsmittel ist Xylol. Die Menge des Lösungsmittels ist in weiten Bereichen variabel. Der Einsatz großer Lösungsmittelmengen führt z.B. zu Polycarbosilanen mit niedrigem Molekulargewicht. Die bei der Umsetzung anfallenden Alkalimetallhalogenide sind gewöhnlich unlöslich und lassen sich daher leicht durch Filtration entfernen.

Das Verfahren kann in weiten Temperaturbereichen durchgeführt werden, wobei die Reaktionstemperatur vorzugsweise jedoch bei Temperaturen von ca. 10 bis 180 °C gehalten wird. Die Reaktion verläuft exotherm und wird vorzugsweise beim Schmelzpunkt des eingesetzten Alkalimetalles, z.B. bei Verwendung von Natrium bei ca. 100 °C, begonnen. Während der Reaktion ist keine Wärmezufuhr von außen erforderlich. Falls die Reaktion zu heftig abläuft, kann gegebenenfalls auch gekühlt werden; grundsätzlich ist eine Kühlung aber nicht zwingend. Weiterhin wird die Reaktion im allgemeinen unter einem geeigneten Schutzgas durchgeführt. Geeignete Schutzgase sind z.B. Stickstoff oder Argon.

Die Reaktion wird im allgemeinen so geführt, daß zunächst eine Suspension des Alkalimetalles in dem Lösungsmittel erzeugt wird. Bevorzugte Lösungsmittel zur Herstellung der Suspension sind Kohlenwasserstoffe wie Xylol oder Dekalin, in welche das Alkalimetall in Form kleiner Stücke eingebracht und anschließend unter intensivem Rühren auf Temperaturen oberhalb des Schmelzpunktes des Alkalimetalles erhitzt wird. Die so erhaltene Alkalimetallsuspension kann entweder nach Abkühlung oder direkt für die weitere Umsetzung verwendet werden. Hierzu werden die übrigen Reaktanden (Dihalogensilane, Dihalogenkohlenwasserstoffe) in die Alkalimetallsuspension eingebracht. Dies geschieht entweder durch gleichzeitiges Zutropfen der Reaktanden zur Metallsuspension oder durch gleichzeitiges Einleiten der Reaktanden direkt in die Metallsuspension. Bevorzugt ist das Einleiten der Reaktanden direkt in die Metallsuspension. Insbesondere erweist es sich als vorteilhaft, wenn die Reaktanden bereits vor dem Einleiten miteinander vermischt und gegebenenfalls mit einem geeigneten Lösungsmittel verdünnt werden.

Nach erfolgter Umsetzung kann man das Polycarbosilan durch jede geeignete Methode aus dem Reaktonsgemisch gewinnen. Ist das Polycarbosilan im Lösungsmittel löslich, so lassen sich die sonstigen unlöslichen Komponenten durch Filtration abtrennen. Das im Lösungsmittel zurückbleibende Polycarbosilan kann durch Waschen mit Wasser gereinigt und durch Entzug des Lösungsmittels zu einem Pulver getrocknet werden. Sofern überschüssiges Alkalimetall verwendet wurde, wird dieses vor der Isolierung des Polycarbosilans mit einem geeigneten Alkohol in an sich üblicher Weise solvolysiert. Geeignete Alkohole sind je nach verwendetem Alkalimetall Methanol, Ethanol, Isopropanol, Tertiärbutanol. Die gebildeten Alkalimetallalkoholate werden anschließend durch Zugabe von Wasser weiter zersetzt und die sich abscheidenden Alkalimetallsalze durch Filtration entfernt. Sind die gebildeten Polycarbosilane im Lösungsmittel aber unlöslich, so können sie durch ein geeignetes anderes Lösungsmittel extrahiert werden, anschließend durch Waschen mit Wasser gereinigt und durch Entzug des Lösungsmittels zu einem Pulver getrocknet werden.

Durch das erfindungsgemäße Verfahren wird eine einfache und allgemein anwendbare Methode zur bequemen Herstellung unterschiedlicher Polycarbosilane zur Verfügung gestellt. Das erfindungsgemäße Verfahren gestattet es, sowohl bereits bekannte als auch neue Polycarbosilane herzustellen. Das Verfahren ermöglicht durch Variation von Art und Anzahl der eingesetzten Reaktanden, d.h. der Dihalogensilane einerseits und der gesättigten Dihalogenkohlenwasserstoffe andererseits, die Herstellung einer Vielzahl interessanter und bisher nicht zugänglicher Polycarbosilane der allgemeinen Formel I.

In einer Variante des erfindungsgemäßen Verfahrens werden Mischungen von unterschiedlich substituierten Dihalogensilanen der allgemeinen Formel II mit Mischungen von gesättigten Dihalogenkohlenwasserstoffen der allgemeinen Formel III mit sich unterscheidenden Gruppen A miteinander umgesetzt. Durch Umsetzung von Dihalogensilan-Gemischen mit Dihalogenkohlenwasserstoff-Gemischen erhält man so z.B. Polycarbosilane, in denen verschiedene Struktureinheiten der allgemeinen Formel I nebeneinander vorliegen, die sich entsprechend der gewählten Art und Anzahl der verwendeten Reaktanden unabhängig voneinander in den Substituenten R¹ und/oder R² und/oder den Resten A unterscheiden können. Gewöhnlich werden aber nicht mehr als maximal drei unterschiedliche Dihalogensilane mit nicht mehr als maximal drei unterschiedlichen Dihalogenkohlenwasserstoffen gleichzeitig miteinander umgesetzt. Zweckmäßig ist insbesondere die Umsetzung von Gemischen aus nicht mehr als maximal drei verschiedenen Dihalogensilanen mit nur einem Dihalogenkohlenwasserstoff oder von nur einem Dihalogensilan mit Gemischen aus maximal drei verschiedenen Dihalogenkohlenwasserstoffen. Die Menge der eingesetzten Dihalogensilane oder deren Gemische zur Menge der eingesetzten Dihalogenkohlenwaserstoffe oder deren Gemische wird bevorzugt so bemessen, daß insgesamt ein Molverhältnis von Dihalogensilanen zu Dihalogenkohlenwasserstoffen von 1:1 vorliegt; im allgemeinen sind aber auch Abweichungen von diesem Molverhältnis bis zu 90 % möglich.

In einer bevorzugten Variante wird nur ein einziges Dihalogensilan mit nur einem einzigen gesättigten Dihalogenkohlenwasserstoff umgesetzt. Nach dieser Verfahrensvariante werden sehr einheitliche kettenförmige Polycarbosilane erhalten, wobei in allen Struktureinheiten der allgemeinen Formel I dieses Polycarbosilans die Substituenten R¹, R² und der Rest A jeweils nur eine Bedeutung besitzen. Das Molverhältnis der beiden Reaktanden beträgt bevorzugt 1:1; im allgemeinen sind aber auch Abweichungen von diesem Molverhältnis von bis zu 90 % möglich.

In einer weiteren Variante des erfindungsgemäßen Verfahrens ist es möglich, sofern erwünscht, eine zusätzliche gezielte Vernetzung der linearen Polycarbosilanketten auf Basis der allgemeinen Strukturformel I zu bewirken. Je nach angestrebten Vernetzungsgrad werden dann bis zu 50 Mol-% des eingesetzten Dihalogensilans II durch ein Trihalogensilan der Formel RSiX₃ ersetzt, worin X die Bedeutung Halogen, vorzugsweise Chlor oder Brom, und R die für R¹ oben angegebene Bedeutung Wasserstoff, Alkyl, Cycloalkyl, Aryl oder Arylalkyl besitzt. Das Trihalogensilan RSiX₃ kann entweder gleich in das der Metallsuspension zuzuführende Reaktandengemisch aus Dihalogensilan II und gesättigtem Dihalogenkohlenwasserstoff III eingemischt werden; es kann aber auch getrennt von diesem Reaktandengemisch in die Metallsuspension zugetropft oder eingeleitet werden. Beispiele für verwendbare Trihalogensilane RSiX₃ sind Trichlorsilan, Methyltribromsilan, Methyltrichlorsilan oder Phenyltrichlorsilan. Nach dieser Verfahrensvariante werden vernetzte Polycarbosilane auf Basis der Strukturelemente der allgemeinen Formel I erhalten, die zusätzlich Verzweigungsgruppen der Formel IV 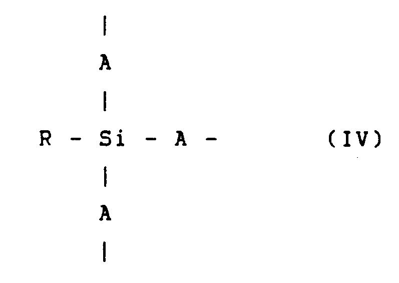
enthalten, an die sich wieder Si-Atome der Struktureinheit I anschließen, und worin R und A die obige Bedeutung besitzen.

Ferner läßt sich in einer weiteren Verfahrensvariante eine Vernetzung der linearen Polycarbosilanketten auf Basis der allgemeinen Strukturformel I durch Zugabe von Tetrahalogensilanen wie Tetrachlorsilan oder Tetrabromsilan erreichen. Es werden vernetzte Polycarbosilane auf Basis der Strukturelemente der allgemeinen Formel I erhalten, die zusätzlich Verzweigungsgruppen der Formel V 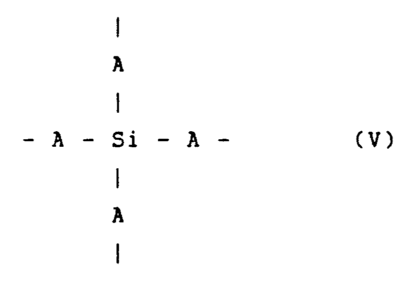
enthalten, an die sich wieder Si-Atome der Struktureinheiten I anschließen, und worin A die obige Bedeutung besitzt.

Darüber hinaus kann in einer weiteren Verfahrensvariante der Kondensationsgrad der herzustellenden kettenförmigen oder vernetzten Polycarbosilane auf Basis der allgemeinen Strukturformel I gesteuert werden, indem die Kondensation durch Zusatz von Kondensationsabbruch-Reagentien gestoppt wird. Geeignete Reagentien für den Abbruch der Kondensationsreaktion sind Monohalogensilane R′₃SiX, worin X die Bedeutung Halogen, vorzugsweise Chlor oder Brom, und R′ die für R² oben angegebene Bedeutung Alkyl, Cycloalkyl, Aryl oder Arylalkyl besitzt; weitere geeignete Reagentien für den Abbruch der Kondensationsreaktion sind Monohalogenkohlenwasserstoffe R˝Y, worin Y die Bedeutung Jod, Brom oder Chlor und R˝ die Bedeutung Alkyl oder Cycloalkyl besitzt. Beispiele für geeignete Monohalogensilane sind Trimethylchlorsilan, Trimethylbromsilan oder Diphenylmethylchlorsilan. Beispiele für geeignete Monohalogenkohlenwasserstoffe sind Methylbromid oder Methylchlorid.

Die Art der Endgruppen, die in den durch das erfindungsgemäße Verfahren hergestellten Polycarbosilanen vorliegen, hängt davon ab, ob das Verfahren mit oder ohne Kettenabbruch-Reagentien durchgeführt wird. Die Endgruppen können einerseits nur einseitig umgesetzte Halogensilylgruppen der Formeln R^{1a}R^{2a}Si(X)-, R¹′R²Si(X)- und/oder R^{1b} R^{2b} Si (X)- und/oder Halogenkohlenwasserstoffgruppen der Formel Y-A- bzw. auch durch Solvolyse entstandene R^{1a}R^{2a}Si(OH)-, R¹′R²Si(OH)- und/oder R^{1b}R^{2b}Si(OH)-und/oder R^{1a}R^{2a}Si(OAlkyl)-, R¹′R²Si(OAlkyl)- und/oder R^{1b}R^{2b}Si-(O-Alkyl)- und/oder Kettenabbruchgruppen wie Trialkylsilylgruppen oder niedere Alkylgruppen sein. Beispiele für Endgruppen sind Dimethylchlorsilyl, Dimethylbromsilyl, Phenylmethylchlorsilyl, Phenylmethylbromsilyl, Diphenylchlorsilyl, Diphenylbromsilyl, Halogenalkylgruppen wie Chlormethyl, Brommethyl, Chlorethyl, Bromethyl, 2-Chlor-1-methylethyl, oder Chlorcyclohexyl, Dimethylhydroxysilyl, Methylphenylhydroxysilyl, Diphenylhydroxysilyl, Dimethylmethoxysilyl, Dimethylethoxysilyl, Methylphenylmethoxysilyl, Methylphenylethoxysilyl, Diphenylmethoxysilyl, Diphenylethoxysilyl, oder Kettenabbruchgruppen wie Trimethylsilyl, Diphenylmethylsilyl, Methyl oder Ethyl. R^{1a}, R^{2a} , R^{1b}, R^{2b}, R^{1'} , R², X, Y und A besitzen jeweils die weiter oben bzw. nachfolgend angegebenen Bedeutungen.

Nach dem erfindungsgemäßen Verfahren können insbesondere auch bekannte Polycarbosilane auf Basis von Struktureinheiten der allgemeinen Formel Ia, 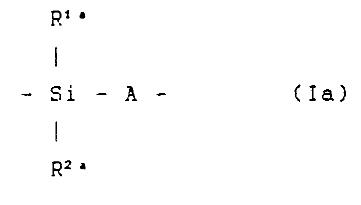
worin
- R^{1a}: für Wasserstoff, Alkyl, Cycloalkyl oder Arylalkyl steht, wobei R^{1a} in verschiedenen Einheiten ein und desselben Polycarbosilans auch unterschiedliche Bedeutung besitzen kann,
- R^{2a}: für Alkyl, Cycloalkyl oder Arylalkyl steht, wobei R^{2a} in verschiedenen Einheiten ein und desselben Polycarbosilans auch unterschiedliche Bedeutung besitzen kann, und
- A: für einen geradkettigen oder verzweigten Alkylen-Rest oder für einen Cycloalkylen-Rest steht, wobei A in verschiedenen Einheiten ein und desselben Polycarbosilans auch unterschiedliche Bedeutung besitzen kann,

hergestellt werden. Es liegen Polycarbosilane auf Basis von Struktureinheiten der Formel Ia mit gesättigten Kohlenwasserstoffbrücken A vor, wobei die Reste Alkyl, Cycloalkyl, Arylalkyl, Alkylen und Cycloalkylen wie weiter oben angegeben definiert sind. Diese durch das erfindungsgemäße Verfahren hergestellten Polycarbosilane zeichnen sich durch ihre größere Reinheit und Einheitlichkeit gegenüber bekannten, nach pyrolytischen Verfahren hergestellten Produkten des Standes der Technik aus.

Die Erfindung betrifft ferner neue Polycarbosilane auf Basis von Struktureinheiten der allgemeinen Formel I', 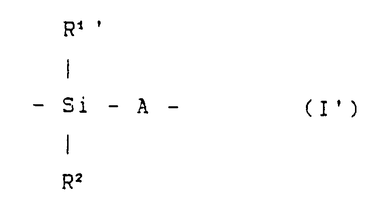
worin
- R¹': für Aryl steht, wobei R¹' in verschiedenen Einheiten ein und desselben Polycarbosilans auch unterschiedliche Bedeutung besitzen kann,
- R²: für Alkyl, Cycloalkyl, Aryl oder Arylalkyl steht, wobei R² in verschiedenen Einheiten ein und desselben Polycarbosilans auch unterschiedliche Bedeutung besitzen kann, und
- A: für einen geradkettigen oder verzweigten Alkylen-Rest oder für einen Cycloalkylen-Rest steht, wobei A in verschiedenen Einheiten ein und desselben Polycarbosilans auch unterschiedliche Bedeutung besitzen kann.

in denen bis zu maximal 50 % der Struktureinheiten der allgemeinen Formel I' durch Struktureinheiten der allgemeinen Formel Ib, 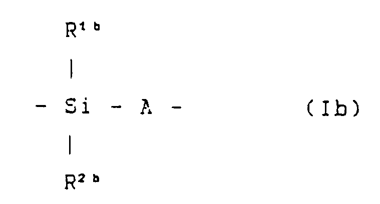
ersetzt sind,
worin
- R^{1b}: für Alkyl, Cycloalkyl oder Arylalkyl steht, wobei R^{1b} in verschiedenen Einheiten ein und desselben Polycarbosilans auch unterschiedliche Bedeutung besitzen kann,
- R^{2b}: für Alkyl, Cycloalkyl oder Arylalkyl steht, wobei R^{2b} in verschiedenen Einheiten ein und desselben Polycarbosilans auch unterschiedliche Bedeutung besitzen kann, und
- A: für einen geradkettigen oder verzweigten Alkylen-Rest oder für einen Cykloalkylen-Rest steht, wobei A in verschiedenen Einheiten ein und desselben Polycarbosilans auch unterschiedliche Bedeutung besitzen kann.

Es liegen Polycarbssilane auf Basis von Struktureinheiten der Formeln I' und Ib mit gesättigten Kohlenwasserstoffbrücken A vor, wobei die Reste Alkyl, Cycloalkyl, Arylalkyl, Alkylen und Cycloalkylen wie weiter unten angegeben definiert sind.

In einer Ausgestaltung der Erfindung bestehen die Polycarbosilane aus einer Anzahl verschiedener, nebeneinander vorliegender Struktureinheiten der allgemeinen Formeln I' und Ib. Diese Struktureinheiten können sich in den Reiten A und/oder den Substituenten R² und/oder R¹' bzw. den Substituenten R^{1b} und/oder R^{2b} unterscheiden. Gewöhnlich stellen die das Polycarbosilan aufbauenden Struktureinheiten der allgemeinen Formeln I' und Ib Kombinationen von nicht mehr als maximal drei unterschiedlich substituierten Si-Einheiten und von nicht mehr als maximal drei unterschiedlichen A-Einheiten dar.

In einer zweckmäßigen Variante besitzt A in allen Struktureinheiten der allgemeinen Formeln I' und Ib des Polycarbosilans nur eine einzige Bedeutung; es liegen dann z.B. solche Polycarbosilane vor, in denen die Struktureinheiten der allgemeinen Formeln I' und Ib aus Kombinationen von nicht mehr als drei unterschiedlich substituierten Si-Einheiten und lediglich einer A-Einhoit aufgebaut sind.

In einer weiteren zweckmäßigen Variante besitzen die Substituenten R² und R¹' bzw. R², R¹', R^{1b} und R^{2b} in allen Struktureinheiten der allgemeinen Formeln I' und Ib des Polycarbosilans jeweils nur eine einzige Bedeutung. Es liegen dann z.B. Polycarbosilane aus Strukturelementen der allgemeinen Formeln I' und Ib vor, in denen nur ein einziger Typ einer R¹'R²Si-Einheit und nur ein einziger Typ einer R^{1b}R^{2b}Si-Einheit vorliegt.

In einer bevorzugten Variante liegen erfindungsgemäße Polycarbosilane vor, in denen nur ein einziger Typ eines Strukturelementes der allgemeinen Formel I' und nur ein einziger Typ eines Strukturelementes der allgemeinen Formel Ib vorliegt, und wobei A in allen Strukturelementen der Formeln I' und Ib identisch ist.

In den erfindungsgemäßen Polycarbosilanen auf Basis der Struktureinheiten der Formeln I' und Ib kann der Rest R¹' für Aryl stehen; Aryl steht hierbei mit der Bedeutung eines unsubstituierten oder inert substituierten aromatischen Kohlenwasserstoffrestes. Beispiele für Aryl sind Phenyl, Naphthyl, p-Diphenyl, oder Alkylarylreste wie Tolyl, Ethylphenyl oder Propylphenyl.

In den erfindungsgemäßen Polycarbosilanen auf Basis der Struktureinheiten der Formeln I' und Ib können die Reste R² , R^{1b} und/oder R^{2b} für Alkyl stehen; Alkyl besitzt hierbei die Bedeutung eines gesättigten oder ungesättigten, geradkettigen oder verzweigten Alkylrestes, der gegebenenfalls durch inerte Reste weiter substituiert sein kann. Beispiele für geeignete Alkylreste sind C1- bis C16-Alkylreste, wie z.B. Methyl, Ethyl, Propyl, Butyl, Pentyl, Hexyl, Octyl, Dodecyl, Hexadecyl, Isopropyl, Isobutyl, Tertiärbutyl oder Allyl, insbesondere aber C1- bis C6-Alkylreste, vorzugsweise niedrige Alkylreste mit 1 bis 4 C-Atomen.

In den erfindungsgemäßen Polycarbosilanen auf Basis der Struktureinheiten der Formeln I' und Ib können die Reste R², R^{1b} und/oder R^{2b} für Cycloalkyl stehen; Cycloalkyl steht hierbei mit der Bedeutung eines gesättigten oder ungesättigten, gegebenenfalls durch inerte Reste weiter substituierten Cycloalkylrestes. Beispiele für Cycloalkyl sind Cyclopentyl, Cyclohexyl, Cyclopentenyl oder Cyclohexenyl.

In den erfindungsgemäßen Polycarbosilanen auf Basis der Struktureinheiten der Formeln I' und Ib kann der Rest R² für Aryl stehen; Aryl steht hierbei mit der Bedeutung eines unsubstituierten oder inert substituierten aromatischen Kohlenwasserstoffrestes. Beispiele für Aryl sind Phenyl, Naphthyl, p-Diphenyl oder Alkylarylreste wie Tolyl, Ethylphenyl oder Propylphenyl.

In den erfindungsgemäßen Polycarbosilanen auf Basis der Struktureinheiten der Formeln I' und Ib können die Reste R² , R^{1b} und/oder R^{2b} für Arylalkyl stehen; Beispiele für Arylalkylgruppen sind Phenylmethyl oder Phenylethyl.

In einer bevorzugten Variante der erfindungsgemäßen Polycarbosilane auf Basis der Struktureinheiten der Formeln. I' und Ib steht der Substituent R² für Aryl, vorzugsweise für Phenyl. In den Struktureinheiten der Formel I' liegen dann als R¹'R²Si-Gruppen Diarylsilylengruppen wie z.B. Arylphenylsilylen vor. In einer besonders zweckmäßigen Ausgestaltung dieser Variante der erfindungsgemäßen Polycarbosilane auf Basis der Struktureinheiten der Formeln I' und Ib sind beide Substituenten R² und R¹' gleich. Vorzugsweise sind aber beide Substituenten R² und R¹' gleich Phenyl und die R¹'R²Si-Gruppe in der Struktureinheit der Formel I' ist dann Diphenylsilylen.

Eine weitere zweckmäßige Variante der Erfindung umfaßt solche Polycarbosilane auf Basis der Struktureinheiten der Formeln I' und Ib, in denen R^{1b} und/oder R^{2b} für niederes Alkyl, vorzugsweise für Methyl, Ethyl, Propyl oder Butyl stehen. Beispiele für solche in den Stuktureinheiten der Formel Ib enthaltenen R^{1b}R^{2b}Si-Einheiten sind Dimethylsilylen, Diethylsilylen, Dipropylsilylen, Dibutylsilylen, Methylethylsilylen, Methylpropylsilylen, oder Methylbutylsilylen.

In den erfindungsgemäßen Polycarbosilanen auf Basis der Struktureinheiten der Formeln I' und Ib kann die Einheit A für einen gesättigten, geradkettigen oder verzweigten Alkylenrest oder für einen gesättigten Cycloalkylen-Rest stehen. Besonders vorteilhaft sind aber C₁ - bis C₆-Alkylen-Reste, wie Methylen, Ethylen, Trimethylen, Propylen, Tetramethylen, Pentamethylen oder Hexamethylen; bevorzugt sind die mit 1 bis 4 C-Atomen niederen Alkylen-Reste wie z.B. Methylen, Ethylen, Trimethylen, Propylen oder Butylen, insbesondere aber Methylen. Falls die Einheit A jedoch für einen Cycloalkylen-Rest steht, sind C₄-bis C₇-Cycloalkylen-Reste wie Cyclopentylen oder Cyclohexylen zweckmäßig.

Die erfindungsgemäßen Polycarbosilane sind feste oder flüssige, wachsartige oder kristalline Materialien mit einer Struktur, in welcher im wesentlichen jedes Silicium-Atom nur an Kohlenstoff-Atome gebunden ist. Diese Polycarbosilane zeichnen sich dadurch aus, daß sie einen Si-Si-Bindungsanteil von nur maximal 5 % besitzen. In den erfindungsgemäßen Beispielen liegt der Si-Si-Bindungsanteil sogar unter 1 %.

Die Anzahl der Struktureinheiten, die die erfindungsgemäßen Polycarbosilane aufbauen, liegt im allgemeinen bei Werten zwischen 10 und 500, vorzugsweise zwischen 30 und 150. Die Polycarbosilane weisen damit mittlere Molekulargewichte im Bereich von 580 bis 300.000 g/mol auf.

In einer Variante der Erfindung können die Polycarbosilane durch Verzweigungsgruppen der allgemeinen Formeln IV und/oder V 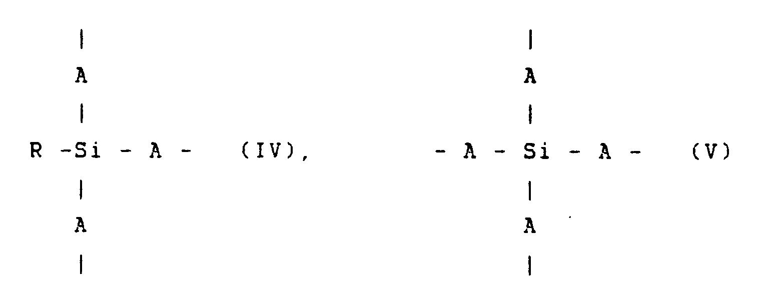
worin
- A: die obige Bedeutung und
- R: die für R¹ oben angegebene Bedeutung Wasserstoff, Alkyl, Cycloalkyl, Aryl oder Arylalkyl besitzt,
vernetzt sein. Durch die Verzweigungsgruppen IV und/oder V können die erfindungsgemäßen Polybarbosilane bis zu 50% vernetzt sein.

Die erfindungsgemäßen Polycarbosilane auf Basis der allgemeinen Struktureinheiten der Formeln I' und Ib können verschiedene Endgruppen aufweisen. Die Endgruppen können einerseits nur einseitig umgesetzte Halogensilylgruppen der Formeln R^{1a}R^{2a}Si(X)-, R¹'R²Si(X)-und/oder R^{1b}R^{2b}Si(X)- und/oder Halogenkohlenwasserstoffgruppen der Formel Y-A- bzw, auch durch Solvolyse entstandene R^{1a}R^{2a}Si(OH)-, R¹'R²Si(OH)- und/oder R^{1b}R^{2b}Si(OH)-und/oder R^{1a}R^{2a}Si(OAlkyl)-, R¹'R²Si(OAlkyl)- und/oder R^{1b}R^{2b}Si-(O-Alkyl)-Gruppen oder andererseits Kettenabbruchgruppen wie Trialkylsilylgruppen oder niedere Alkylgruppen sein. Beispiele für Endgruppen sind Dimethylchlorsilyl, Dimethylbromsilyl, Phenylmethylchlorsilyl, Phenylmethylbromsilyl, Diphenylchlorsilyl, Diphenylbromsilyl, Halogenalkylgruppen wie Chlormethyl, Brommethyl, Chlorethyl, Bromethyl, 2-Chlor-1-methylethyl oder Chlorcyclohexyl, Dimethylhydroxysilyl, Methylphenylhydroxysilyl, Diphenylhydroxysilyl, Dimethylmethoxysilyl, Dimethylethoxysilyl, Methylphenylmethoxysilyl, Methylphenylethoxysilyl, Diphenylmethoxysilyl, Diphenylethoxysilyl oder Kettenabbruchgruppen wie Trimethylsilyl, Diphenylmethylsilyl, Methyl oder Ethyl.

Das erfindungsgemäße Verfahren gestattet es, in vorteilhafter Weise Polycarbosilane direkt aus monomeren Dihalogensilanen herzustellen, ohne daß dabei der Umweg über Polysilane und deren pyrolytische Umwandlung in das Polycarbosilan beschritten werden muß. Es handelt sich dabei um ein sehr schonendes Verfahren, welches es gestattet, Polycarbosilane mit hoher Reinheit herzustellen. Insbesondere sind sie gegenüber den auf pyrolytischem Wege gewonnenen, bekannten Polycarbosilanen einheitlicher und weisen eine größere Reinheit auf. Das erfindungsgemäße Verfahren ermöglicht darüber hinaus die Herstellung neuer bisher nicht zugänglicher Polycarbosilane. Ein besonderes Merkmal einer Gruppe der erfindungsgemäßen Polycarbosilane sind die darin enthaltenen Arylsubstituenten. So sind in den Polycarbosilanen auf Basis von Struktureinheiten der Formeln I' und Ib die Substituenten R¹' in jedem Fall Arylsubstituenten und die Substituenten R² können Arylsubstituenten sein; in den Polycarbosilanen auf Basis der Struktureinheiten der Formeln I' und Ib sind somit 25 bis 50 % der Substituenten R¹', R² , R^{1b} und R^{2b} Arylsubstituenten. In besonders vorteilhaften Polycarbosilanen der Erfindung sind die Arylsubstituenten Phenylreste. Die erfindungsgemäßen neuen Polycarbosilane zeichnen sich weiterhin durch definierte Eigenschaften aus, die durch gezielte Variation der Molekülgröße, Zahl und Art der Vernetzungen sowie durch entsprechende Wahl der Gruppen A, R² , R¹', R^{1b} und R^{2b} bestimmt werden.

Die erfindungsgemäßen Polycarbosilane eignen sich einerseits als wertvolle Ausgangspolymere für die Herstellung technisch hochwertiger Siliciumcarbid-Keramiken, sind andererseits aber auch hervorragend für diverse andere technische Anwendungen geeignet, z.B. als Bindematerialien oder Beschichtungsmaterialien.

Die Erfindung wird im folgenden anhand von Beispielen weiter erläutert, ohne sie jedoch dadurch zu beschränken. Die darin enthaltenen Teil- und Prozentangaben sind als Gewichtsangaben zu verstehen. Alle Umsetzungen wurden in Standard-Laboratoriumsapparaturen und soweit notwendig unter einer Schutzgasatmosphäre aus Stickstoff oder Argon durchgeführt.

### Beispiel 1

In eine Suspension von 185 g Natrium in 2000 ml Xylol wurde bei einer Temperatur von 100 °C ein Gemisch von 475 g Diphenyldichlorsilan und 326 g Methylenbromid eingeleitet. Während des Verlaufs der exothermen Reaktion erwärmte sich die Reaktionslösung auf 132 °C. Nach Einleitung des gesamten Gemisches wurde die Reaktionslösung eine weitere Stunde ohne Wärmezufuhr gerührt. Durch anschließende Zugabe von 300 ml Methanol wurde nicht abreagiertes Natrium umgesetzt und die Lösung durch Filtration von Natriumhalogeniden befreit. Nach mehrfacher Extraktion des Filtrates mit Wasser wurde die Xylolphase abgetrennt, erneut filtriert, das Xylol abdestilliert und das verbliebene Polycarbonsilan im Vakuum getrocknet. Hierdurch erhielt man 349 g festes Polycarbosilan. Die Elementaranalyse dieses Materials ergab einen Gehalt an 79,61 % C, 6,14 % H und 14,2 % Si. IR- und ¹H-NMR-Analysen zeigten die Anwesenheit von Phenyl- sowie Si-Phenyl- und Si-Methylen-Bindungen. Der Anteil an Si-Si-Bindungen war kleiner als 1 %.

### Beispiel 2

In eine Suspension von 49,2 g Natrium in 300 ml Xylol wurde bei einer Temperatur von 130 °C ein Gemisch von 63,3 g Diphenyldichlorsilan, 32,3 g Dimethyldichlorsilan und 86,9 g Methylenbromid eingeleitet. Im Verlauf der exothermen Reaktion lag die Temperatur der Lösung bei 132 °C. Nach Einleitung des gesamten Gemisches wurde die Reaktionslösung ohne Wärmezufuhr noch eine Stunde gerührt. Durch anschließende Zugabe von 200 ml Methanol wurde nicht abreagiertes Natrium umgesetzt und die Lösung durch Filtration von Natriumhalogeniden befreit. Nach mehrfacher Extraktion des Filtrates mit Wasser wurde die Xylolphase abgetrennt, erneut filtriert, das Xylol abdestilliert und das verbleibende Polycarbosilan im Vakuum getrocknet Hierdurch erhielt man 53,7 g festes Polycarbosilan. Die Elementaranalyse dieses Materials ergab einen Gehalt an 71,26 % C, 7,09 % und 21,12 % Si. IR- und ¹H-NMR-Analysen zeigten die Anwesenheit von Si-Phenyl-, Si-Methyl- und Si-Methylen-Bindungen. Der Anteil an Si-Si-Bindungen war kleiner als 1 %.

### Beispiel 3

In eine Suspension von 84 g Natrium in 200 ml Dekalin wurde bei einer Temperatur von 180 °C ein Gemisch von 89,5 g Methyldichlorsilan 4,76 g Trichlorsilan, 5,26 g Methyltrichlorsilan und 74,2 g Methylenchlorid innerhalb von 45 Minuten eingeleitet. Während des Verlaufs der exothermen Reaktion wurde die Reaktionstemperatur bei 180 °C gehalten. Nach Einleitung des Gemisches wurde die Reaktionslösung noch eine Stunde bei 180 °C gerührt, anschließend abgekühlt und nicht abreagiertes Natrium mit 200 ml Methanol umgesetzt. Die Reaktionslösung wurde filtriert und sowohl der Rückstand als auch das Filtrat mehrfach mit Wasser extrahiert um entstandenes Natriumchlorid zu entfernen. Aus dem Rückstand wurden nach Trocknung im Vakuum 15 g eines festen unlöslichen Polycarbosilans gewonnen. Nach Extraktion des Filtrates mit Wasser, Abtrennung der Dekalinphase und Abdestillation des Dekalins wurde das so erhaltene Polycarbosilan im Vakuum getrocknet. Es wurden 11,3 g eines löslichen viskosen Polycarbosilans isoliert. Die Elementaranalyse der erhaltenen Materialien ergab einen Gehalt an 38,2 % C, 9,95 % H und 51,5 % Si. IR- und ¹H-NMR-Analysen zeigten die Anwesenheit von Si-Methyl, Si-Methylen- und Si-H-Bindungen. Der Anteil an Si-Si-Bindungen war kleiner als 1 %.

## Patentansprüche (Patentansprüche für folgende(n) Vertragsstaat(en): AT, BE, CH, DE, FR, GR, GB, IT, NL, SE)

1. Verfahren zur Herstellung von Polycarbosilanen auf Basis von Struktureinheiten der allgemeinen Formel I, 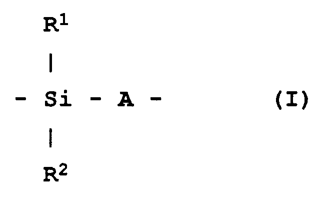 worin
R¹ für Wasserstoff, Alkyl, Cycloalkyl, Aryl oder Arylalkyl steht, wobei R¹ in verschiedenen Einheiten ein und desselben Polycarbosilans auch unterschiedliche Bedeutung besitzen kann,
R² für Alkyl, Cycloalkyl, Aryl oder Arylalkyl steht, wobei R² in verschiedenen Einheiten ein und desselben Polycarbosilans auch unterschiedliche Bedeutung besitzen kann, und
A für einen geradkettigen oder verzweigten Alkylen-Rest oder für einen Cycloalkylen-Rest steht, wobei A in verschiedenen Einheiten ein und desselben Polycarbosilans auch unterschiedliche Bedeutung besitzen kann,
durch Umsetzung wenigstens eines Dihalogensilans der allgemeinen Formel II, 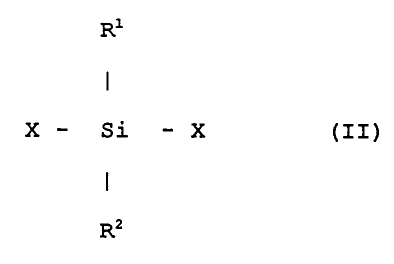 worin
R¹ und R² die oben angegebene Bedeutung besitzen und X für Halogen steht
mit wenigstens einem Dihalogenkohlenwasserstoff der allgemeinen Formel III,
Y - A - Y (III)
worin
A die oben angegebene Bedeutung besitzt und
Y für die Halogene Chlor, Brom oder Jod steht,
in Gegenwart eines Alkalimetalles.

2. Polycarbosilane auf Basis von Struktureinheiten der allgemeinen Formeln I' und Ib 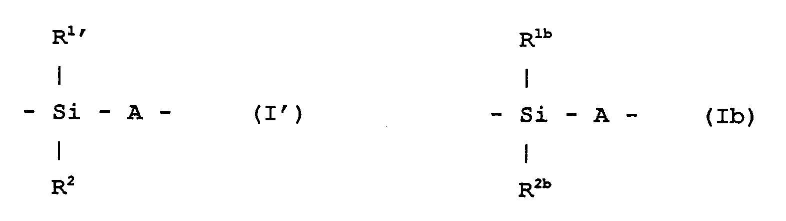 wobei in (I')
R¹' für Aryl steht, wobei R¹' in verschiedenen Einheiten ein und desselben Polycarbosilans auch unterschiedliche Bedeutung besitzen kann,
R² für Alkyl, Cycloalkyl, Aryl oder Arylalkyl steht, wobei R² in verschiedenen Einheiten ein und desselben Polycarbosilans auch unterschiedliche Bedeutung besitzen kann, und
A für einen geradkettigen oder verzweigten Alkylen-Rest oder für einen Cykloalkylen-Rest steht, wobei A in verschiedenen Einheiten ein und desselben Polycarbosilans auch unterschiedliche Bedeutung besitzen kann,
und wobei in (Ib)
R^{1b} für Alkyl, Cycloalkyl oder Arylalkyl steht, wobei R^{1b} in verschiedenen Einheiten ein und desselben Polycarbosilans auch unterschiedliche Bedeutung besitzen kann,
R^{2b} für Alkyl, Cycloalkyl oder Arylalkyl steht, wobei R^{2b} in verschiedenen Einheiten ein und desselben Polycarbosilans auch unterschiedliche Bedeutung besitzen kann, und
A für einen geradkettigen oder verzweigten Alkylen-Rest oder für einen Cykloalkylen-Rest steht, wobei A in verschiedenen Einheiten ein und desselben Polycarbosilans auch unterschiedliche Bedeutung besitzen kann,
wobei die Struktureinheiten der allgemeinen Formel Ib bis zu maximal 50 % vorhanden sind.

3. Polycarbosilane gemäß Anspruch 2, dadurch gekennzeichnet, daß A in allen Struktureinheiten des Polycarbosilans die gleiche Bedeutung besitzt.

4. Polycarbosilane gemäß Anspruch 2 oder 3, dadurch gekennzeichnet, daß der Substituent R² in allen Struktureinheiten identisch ist und der Substituent R¹' in allen Struktureinheiten identisch ist.

5. Polycarbosilane gemäß Anspruch 2 oder 3, dadurch gekennzeichnet, daß der Substituent R² in allen Struktureinheiten identisch ist, der Substituent R¹' in allen Struktureinheiten identisch ist, der Substituent R^{1b} in allen Struktureinheiten identisch ist und R^{2b} in allen Struktureinheiten identisch ist.

6. Polycarbosilane gemäß Anspruch 2, dadurch gekennzeichnet, daß R² für Aryl steht.

7. Polycarbosilane gemäß Anspruch 2, dadurch gekennzeichnet, daß die Substituenten R² und R¹' gleich sind.

8. Polycarbosilane gemäß Anspruch 2, dadurch gekennzeichnet, daß R^{1b} und/oder R^{2b} für C₁ - C₄ Alkyl steht.

9. Polycarbosilane gemäß Anspruch 2, dadurch gekennzeichnet, daß A für einen geradkettigen oder verzweigten C₁- bis C₆ -Alkylen-Rest oder einen C₄ - bis C₇ -Cycloalkylen-Rest steht.

10. Polycarbosilane gemäß Anspruch 9, dadurch gekennzeichnet, daß die C₁- bis C₆-Alkylen-Reste Methylen, Ethylen, Trimethylen, Propylen sind.

11. Polycarbosilane gemäß Anspruch 9, dadurch gekennzeichnet, daß die C₄- bis C₇-Cycloalkylen-Reste Cyclopentylen oder Cyclohexylen sind.

12. Polycarbosilane gemäß Anspruch 2, dadurch gekennzeichnet, daß die Polycarbosilane einen Si-Si-Bindungsanteil von maximal 5 % besitzen.

13. Polycarbosilane gemäß Anspruch 2, dadurch gekennzeichnet, daß Polycarbosilane, daß die Zahl der Struktureinheiten zwischen 10 und 500 liegt.

14. Polycarbosilane gemäß Anspruch 2, gekennzeichnet durch mittlere Molekulargewichte im Bereich von 580 bis 300.000 g/mol.

15. Polycarbosilane gemäß Anspruch 2, dadurch gekennzeichnet, daß sie Verzweigungsgruppen der allgemeinen Formeln IV und/oder V 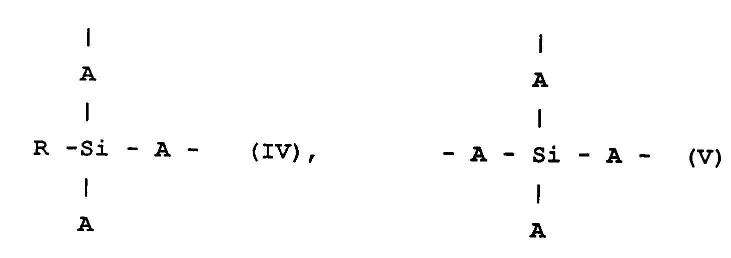 aufweisen, worin
A die obige Bedeutung und
R die Bedeutung Wasserstoff, Alkyl, Cycloalkyl, Aryl oder Arylalkyl besitzt.

16. Polycarbosilane gemäß Anspruch 2, dadurch gekennzeichnet, daß sie als Endgruppen einseitig umgesetzte R^{1a}R^{2a}Si(X)-, R¹'R²Si(X)- und/oder R^{1b}R^{2b}Si(X)-Halogensilylgruppen und/oder Y-A-Halogenkohlenwasserstoffgruppen und/oder durch Solvolyse entstandene R^{1a}R^{2a}Si(OH)-, R¹'R²Si(OH)- und/oder R^{1b}R^{2b}Si(OH)- und/oder R^{1a}R^{2a}Si(OAlkyl)-, R¹'R²Si(OAlkyl)-und/oder R^{1b}R^{2b}Si(OAlkyl)-Gruppen oder Kettenabbruchgruppen aufweisen.

17. Polycarbosilane gemäß Anspruch 2, dadurch gekennzeichnet, daß R² für Phenyl steht.

18. Polycarbosilane gemäß Anspruch 7, dadurch gekennzeichnet, daß R² und R¹' für Phenyl steht.

19. Polycarbosilane gemäß Anspruch 8, dadurch gekennzeichnet, daß R^{1b} und/oder R^{2b} für Methyl, Ethyl, Propyl oder Butyl stehen.

20. Polycarbosilane gemäß Anspruch 13, dadurch gekennzeichnet, daß die Zahl der Struktureinheiten zwischen 30 und 150 liegt.

21. Polycarbosilane gemäß Anspruch 16, dadurch gekennzeichnet, daß sie als Kettenabruchgruppen Trialkylsilylgruppen oder C₁-C₄-Alkylgruppen aufweisen.

## Patentansprüche (Patentansprüche für folgende(n) Vertragsstaat(en): ES)

1. Verfahren zur Herstellung von Polycarbosilanen auf Basis von Struktureinheiten der allgemeinen Formel I, 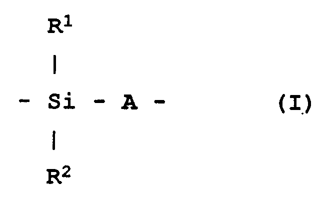 worin
R¹ für Wasserstoff, Alkyl, Cycloalkyl, Aryl oder Arylalkyl steht, wobei R¹ in verschiedenen Einheiten ein und desselben Polycarbosilans auch unterschiedliche Bedeutung besitzen kann,
R² für Alkyl, Cycloalkyl, Aryl oder Arylalkyl steht, wobei R² in verschiedenen Einheiten ein und desselben Polycarbosilans auch unterschiedliche Bedeutung besitzen kann, und
A für einen geradkettigen oder verzweigten AlkylenRest oder für einen Cycloalkylen-Rest steht, wobei A in verschiedenen Einheiten ein und desselben Polycarbosilans auch unterschiedliche Bedeutung besitzen kann,
durch Umsetzung wenigstens eines Dihalogensilans der allgemeinen Formel II, 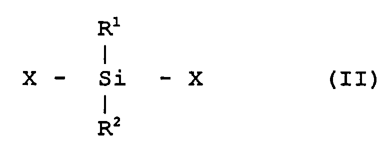 worin
R¹ und R² die oben angegebene Bedeutung besitzen und X für Halogen steht
mit wenigstens einem Dihalogenkohlenwasserstoff der allgemeinen Formel III,
Y-A-Y (III)
worin
A die oben angegebene Bedeutung besitzt und
Y für die Halogene Clor, Brom oder Jod steht,
in Gegenwart eines Alkalimetalles.

2. Verfahren zur Herstellung von Polycarbosilane nach Anspruch 1, dadurch gekannzeichnet, daß ein Dihalogensilan der allgemeinen Formel II mit einem Dihalogenkohlenwasserstoff der allgemeinen Formel III zu Polycarbosilanen auf Basis von Struktureinheiten der allgemeinen Formeln I' und (Ib) 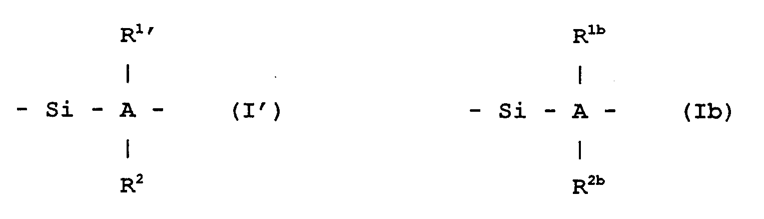 wobei in (I')
R¹' für Aryl steht, wobei R¹' in verschiedenen Einheiten ein und desselben Polycarbosilans auch unterschiedliche Bedeutung besitzen kann,
R² für Alkyl, Cycloalkyl, Aryl oder Arylalkyl steht, wobei R² in verschiedenen Einheiten ein und desselben Polycarbosilans auch unterschiedliche Bedeutung besitzen kann, und
A für einen geradkettigen oder verzweigten Alkylen-Rest oder für einen Cykloalkylen-Rest steht, wobei A in verschiedenen Einheiten ein und desselben Polycarbosilans auch unterschiedliche Bedeutung besitzen kann,
und wobei in (Ib)
R^{1b} für Alkyl, Cycloalkyl oder Arylalkyl steht, wobei R^{1b} in verschiedenen Einheiten ein und desselben Polycarbosilans auch unterschiedliche Bedeutung besitzen kann,
R^{2b} für Alkyl, Cycloalkyl oder Arylalkyl steht, wobei R^{2b} in verschiedenen Einheiten ein und desselben Polycarbosilans auch unterschiedliche Bedeutung besitzen kann, und
A für einen geradkettigen oder verzweigten Alkylen-Rest oder für einen Cykloalkylen-Rest steht, wobei A in verschiedenen Einheiten ein und desselben Polycarbosilans auch unterschiedliche Bedeutung besitzen kann,
derart umgesetzt wird, daß die Struktureinheiten der allgemeinen Formel Ib bis zu maximal 50 % vorhanden sind.

3. Verfahren zur Herstellung von Polycarbosilanen gemäß Anspruch 2, dadurch gekennzeichnet, daß A in allen Struktureinheiten des Polycarbosilans die gleiche Bedeutung besitzt.

4. Verfahren zur Herstellung von Polycarbosilanen gemäß Anspruch 2 oder 3, dadurch gekennzeichnet, daß der Substituent R² in allen Struktureinheiten identisch ist und der Substituent R¹' in allen Struktureinheiten identisch ist.

5. Verfahren zur Herstellung von Polycarbosilanen gemäß Anspruch 2 oder 3, dadurch gekennzeichnet, daß der Substituent R² in allen Struktureinheiten identisch ist, der Substituent R¹' in allen Struktureinheiten identisch ist, der Substituent R^{1b} in allen Struktureinheiten identisch ist und R^{2b} in allen Struktureinheiten identisch ist.

6. Verfahren zur Herstellung von Polycarbosilanen gemäß Anspruch 2, dadurch gekennzeichnet, daß R² für Aryl steht.

7. Verfahren zur Herstellung von Polycarbosilanen gemäß Anspruch 2, dadurch gekennzeichnet, daß die Substituenten R² und R¹' gleich sind.

8. Verfahren zur Herstellung von Polycarbosilanen gemäß Anspruch 2, dadurch gekennzeichnet, daß R^{1b} und/oder R^{2b} für C₁ - C₄ Alkyl stehen.

9. Verfahren zur Herstellung von Polycarbosilanen gemäß Anspruch 2, dadurch gekennzeichnet, daß A für einen geradkettigen oder verzweigten C₁ - bis C₆ -Alkylen-Rest oder einen C₄- bis C₇-Cycloalkylen-Rest steht.

10. Verfahren zur Herstellung von Polycarbosilanen gemäß Anspruch 9, dadurch gekennzeichnet, daß die C₁- bis C₆-Alkylen-Reste Methylen, Ethylen, Trimethylen, Propylen sind.

11. Verfahren zur Herstellung von Polycarbosilanen gemäß Anspruch 9, dadurch gekennzeichnet, daß die C₄- bis C₇-Cycloalkylen-Reste Cyclopentylen oder Cyclohexylen sind.

12. Verfahren zur Herstellung von Polycarbosilanen gemäß Anspruch 2, dadurch gekennzeichnet, daß die Polycarbosilane einen Si-Si-Bindungsanteil von maximal 5 % besitzen.

13. Verfahren zur Herstellung von Polycarbosilanen gemäß Anspruch 2, dadurch gekennzeichnet, daß Polycarbosilane, deren Zahl der Struktureinheiten zwischen 10 und 500 liegt, hergestellt werden.

14. Verfahren zur Herstellung von Polycarbosilanen gemäß Anspruch 2, dadurch gekennzeichnet, daß Polycarbosilane mit einem mittleren Molekulargewicht im Bereich von 580 bis 300.000 g/mol hergestellt werden.

15. Verfahren zur Herstellung von Polycarbosilanen gemäß Anspruch 2, dadurch gekennzeichnet, daß Polycarbosilane mit Verzweigungsgruppen der allgemeinen Formeln IV und/oder V 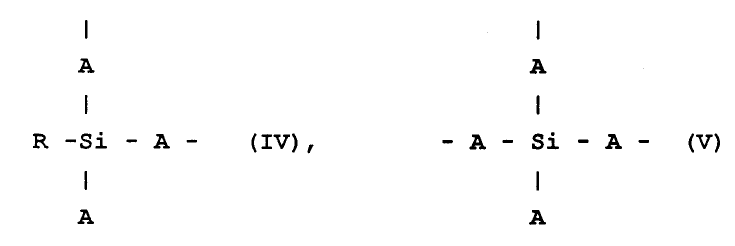 worin
A die obige Bedeutung und
R die Bedeutung Wasserstoff, Alkyl, Cycloalkyl, Aryl oder Arylalkyl besitzt,
hergestellt werden.

16. Verfahren zur Herstellung von Polycarbosilanen gemäß Anspruch 2, dadurch gekennzeichnet, daß Polycarbosilane mit einseitig umgesetzten R^{1a}R^{2a}Si(X)-, R¹'R²Si(X)- und/oder R^{1b}R^{2b}Si(X)-Halogensilylgruppen und/oder Y-A-Halogenkohlenwasserstoffgruppen und/oder durch Solvolyse entstandene R^{1a}R^{2a}Si(OH)-, R¹'R²Si(OH)- und/oder R^{1b}R^{2b}Si(OH)- und/oder R^{1a}R^{2a}Si(OAlkyl)-, R¹'R²Si(OAlkyl)- und/oder R^{1b}R^{2b}Si(OAlkyl)-Gruppen oder Kettenabbruchgruppen als Endgruppen, hergestellt werden.

17. Verfahren zur Herstellung von Polycarbosilanen gemäß Anspruch 2, dadurch gekennzeichnet, daß R² für Phenyl steht.

18. Verfahren zur Herstellung von Polycarbosilanen gemäß Anspruch 7, dadurch gekennzeichnet, daß R² und R¹' für Phenyl steht.

19. Verfahren zur Herstellung von Polycarbosilanen gemäß Anspruch 8, dadurch gekennzeichnet, daß R^{1b} und/oder R^{2b} für Methyl, Ethyl, Propyl oder Butyl stehen.

20. Verfahren zur Herstellung von Polycarbosilanen gemäß Anspruch 13, dadurch gekennzeichnet, daß Polycarbosilane, deren Zahl der Struktureinheiten zwischen 30 und 150 liegt, hergestellt werden.

21. Verfahren zur Herstellung von Polycarbosilanen gemäß Anspruch 16, dadurch gekennzeichnet, daß Polycarbosilane mit Trialkylsilylgruppen oder C₁-C₄-Alkylgruppen als Kettenabbruchgruppen hergestellt werden.

## Claims (Claims for the following Contracting State(s): AT, BE, CH, DE, FR, GR, GB, IT, NL, SE)

1. A process for preparing polycarbosilanes on the basis of structural units of the general Formula I, 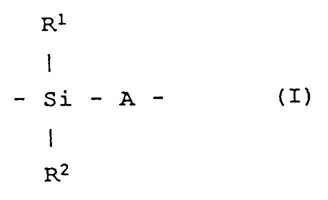 wherein
R¹ stands for hydrogen, alkyl, cycloalkyl, aryl or arylalkyl, whereby R¹ may also have different meanings in different units of one and the same polycarbosilane,
R² stands for alkyl, cycloalkyl, aryl or arylalkyl, whereby R² may also have different meanings in different units of one and the same polycarbosilane, and
A stands for a straight-chain or branched alkylene radical or for a cycloalkylene radical, whereby A may also have different meanings in different units of one and the same polycarbosilane,
by reacting at least one dihalosilane of the general Formula II, 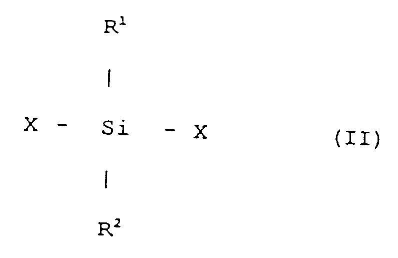 wherein
R¹ and R² have the meanings given above and X stands for halogen,
with at least one dihalo-hydrocarbon of the general Formula III,
Y - A - Y (III)
wherein
A has the meaning given above and
Y stands for the halogens chlorine, bromine or iodine,
in the presence of an alkali metal.

2. Polycarbosilanes on the basis of structural units of the general Formulae I' and Ib, 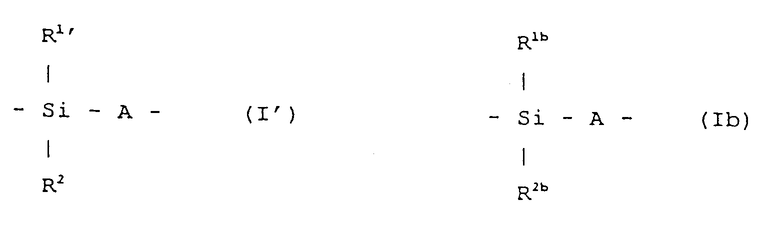 wherein in (I')
R¹' stands for aryl, whereby R¹' may also have different meanings in different units of one and the same polycarbosilane,
R² stands for alkyl, cycloalkyl, aryl or arylalkyl, whereby R² may also have different meanings in different units of one and the same polycarbosilane, and
A stands for a straight-chain or branched alkylene radical or for a cycloalkylene radical, whereby A may also have different meanings in different units of one and the same polycarbosilane,
and wherein in (Ib)
R^{1b} stands for alkyl, cycloalkyl or arylalkyl, whereby R^{1b} may also have different meanings in different units of one and the same polycarbosilane,
R^{2b} stands for alkyl, cycloalkyl or arylalkyl, whereby R^{2b} may also have different meanings in different units of one and the same polycarbosilane, and
A stands for a straight-chain or branched alkylene radical or for a cycloalkylene radical, whereby A may also have different meanings in different units of one and the same polycarbosilane,
the structural units of the general Formula Ib being present up to a maximum of 50%.

3. Polycarbosilanes according to Claim 2, characterised in that A has the same meaning in all the structural units of the polycarbosilane.

4. Polycarbosilanes according to Claim 2 or 3, characterised in that the substituent R² is identical in all the structural units and the substituent R¹' is identical in all the structural units.

5. Polycarbosilanes according to Claim 2 or 3, characterised in that the substituent R² is identical in all the structural units, the substituent R¹' is identical in all the structural units, the substituent R^{1b} is identical in all the structural units and R^{2b} is identical in all the structural units.

6. Polycarbosilanes according to Claim 2, characterised in that R² stands for aryl.

7. Polycarbosilanes according to Claim 2, characterised in that the substituents R² and R¹' are identical.

8. Polycarbosilanes according to Claim 2, characterised in that R^{1b} and/or R^{2b} stand for C₁ - C₄-alkyl.

9. Polycarbosilanes according to Claim 2, characterised in that A stands for a straight-chain or branched C₁- to C₆-alkylene radical or a C₄- to C₇-cycloalkylene radical.

10. Polycarbosilanes according to Claim 9, characterised in that the C₁- to C₆-alkylene radicals are methylene, ethylene, trimethylene or propylene.

11. Polycarbosilanes according to Claim 9, characterised in that the C₄- to C₇-cycloalkylene radicals are cyclopentylene or cyclohexylene.

12. Polycarbosilanes according to Claim 2, characterised in that the polycarbosilanes have a proportion of Si-Si bonds of at most 5%.

13. Polycarbosilanes according to Claim 2, characterised in that polycarbosilanes that the number of structural units is between 10 and 500 [sic].

14. Polycarbosilanes according to Claim 2, characterised by average molecular weights in the range of 580 to 300,000 g/mol.

15. Polycarbosilanes according to Claim 2, characterised in that they have branched groups of the general Formulae IV and/or V, 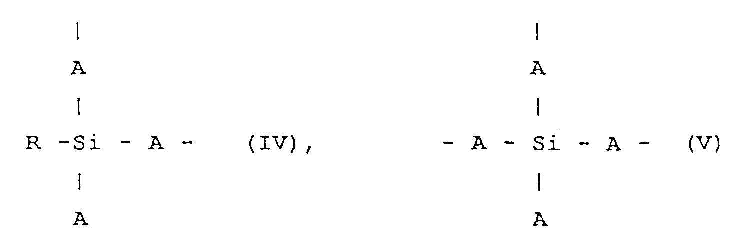 wherein
A has the above meaning and
R has the meaning hydrogen, alkyl, cycloalkyl, aryl or arylalkyl.

16. Polycarbosilanes according to Claim 2, characterised in that they have as end groups unilaterally reacted R^{1a}R^{2a}Si(X)-, R¹'R²Si(X)- and/or R^{1b}R^{2b}Si(X)-halosilyl groups and/or Y-A-halo-hydrocarbon groups, and/or R^{1a}R^{2a}Si(OH)-, R¹'R²Si(OH)- and/or R^{1b}R^{2b}Si(OH)- and/or R^{1a}R^{2a}Si(Oalkyl)-, R¹'R²Si(Oalkyl)- and/or R^{1b}R^{2b}Si(Oalkyl)- groups which have been produced by solvolysis or chain-breaking groups.

17. Polycarbosilanes according to Claim 2, characterised in that R² stands for phenyl.

18. Polycarbosilanes according to Claim 7, characterised in that R² and R¹' stand for phenyl.

19. Polycarbosilanes according to Claim 8, characterised in that R^{1b} and/or R^{2b} stand for methyl, ethyl, propyl or butyl.

20. Polycarbosilanes according to Claim 13, characterised in that the number of structural units is between 30 and 150.

21. Polycarbosilanes according to Claim 16, characterised in that they contain trialkylsilyl groups or C₁ - C₄-alkyl groups as chain-breaking groups.

## Claims (Claims for the following Contracting State(s): ES)

1. A process for preparing polycarbosilanes on the basis of structural units of the general Formula I, 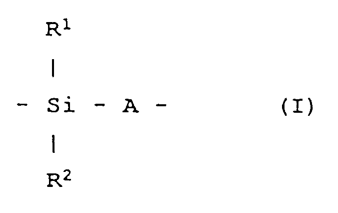 wherein
R¹ stands for hydrogen, alkyl, cycloalkyl, aryl or arylalkyl, whereby R¹ may also have different meanings in different units of one and the same polycarbosilane,
R² stands for alkyl, cycloalkyl, aryl or arylalkyl, whereby R² may also have different meanings in different units of one and the same polycarbosilane, and
A stands for a straight-chain or branched alkylene radical or for a cycloalkylene radical, whereby A may also have different meanings in different units of one and the same polycarbosilane,
by reacting at least one dihalosilane of the general Formula II, 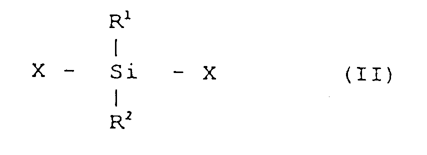 wherein
R¹ and R² have the meanings given above and X stands for halogen,
with at least one dihalo-hydrocarbon of the general Formula III,
Y - A - Y (III)
wherein
A has the meaning given above and
Y stands for the halogens chlorine, bromine or iodine,
in the presence of an alkali metal.

2. A process for preparing polycarbosilanes according to Claim 1, characterised in that a dihalosilane of general formula II is reacted with a dihalo-hydrocarbon of general formula III to form polycarbosilanes on the basis of structural units of the general Formulae I' and Ib, 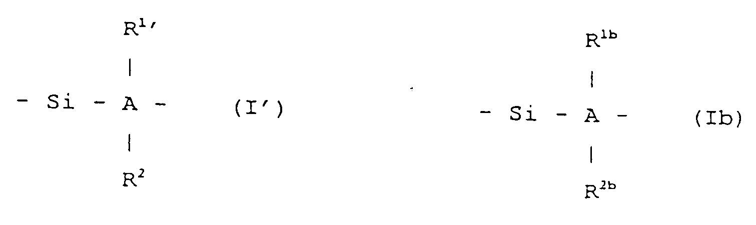 wherein in (I')
R¹' stands for aryl, whereby R¹' may also have different meanings in different units of one and the same polycarbosilane,
R² stands for alkyl, cycloalkyl, aryl or arylalkyl, whereby R² may also have different meanings in different units of one and the same polycarbosilane, and
A stands for a straight-chain or branched alkylene radical or for a cycloalkylene radical, whereby A may also have different meanings in different units of one and the same polycarbosilane,
and wherein in (Ib)
R^{1b} stands for alkyl, cycloalkyl or arylalkyl, whereby R^{1b} may also have different meanings in different units of one and the same polycarbosilane,
R^{2b} stands for alkyl, cycloalkyl or arylalkyl, whereby R^{2b} may also have different meanings in different units of one and the same polycarbosilane, and
A stands for a straight-chain or branched alkylene radical or for a cycloalkylene radical, whereby A may also have different meanings in different units of one and the same polycarbosilane,
such that the structural units of the general Formula Ib are present up to a maximum of 50%.

3. A process for preparing polycarbosilanes according to Claim 2, characterised in that A has the same meaning in all the structural units of the polycarbosilane.

4. A process for preparing polycarbosilanes according to Claim 2 or 3, characterised in that the substituent R² is identical in all the structural units and the substituent R¹' is identical in all the structural units.

5. A process for preparing polycarbosilanes according to Claim 2 or 3, characterised in that the substituent R² is identical in all the structural units, the substituent R¹' is identical in all the structural units, the substituent R^{1b} is identical in all the structural units and R^{2b} is identical in all the structural units.

6. A process for preparing polycarbosilanes according to Claim 2, characterised in that R² stands for aryl.

7. A process for preparing polycarbosilanes according to Claim 2, characterised in that the substituents R² and R¹' are identical.

8. A process for preparing polycarbosilanes according to Claim 2, characterised in that R^{1b} and/or R^{2b} stand for C₁ - C₄-alkyl.

9. A process for preparing polycarbosilanes according to Claim 2, characterised in that A stands for a straight-chain or branched C₁- to C₆-alkylene radical or a C₄- to C₇-cycloalkylene radical.

10. A process for preparing polycarbosilanes according to Claim 9, characterised in that the C₁- to C₆-alkylene radicals are methylene, ethylene, trimethylene or propylene.

11. A process for preparing polycarbosilanes according to Claim 9, characterised in that the C₄- to C₇-cycloalkylene radicals are cyclopentylene or cyclohexylene.

12. A process for preparing polycarbosilanes according to Claim 2, characterised in that the polycarbosilanes have a proportion of Si-Si bonds of at most 5%.

13. A process for preparing polycarbosilanes according to Claim 2, characterised in that polycarbosilanes, the number of structural units of which is between 10 and 500, are produced.

14. A process for preparing polycarbosilanes according to Claim 2, characterised in that polycarbosilanes having an average molecular weight in the range of 580 to 300,000 g/mol are produced.

15. A process for preparing polycarbosilanes according to Claim 2, characterised in that polycarbosilanes having branched groups of the general Formulae IV and/or V, 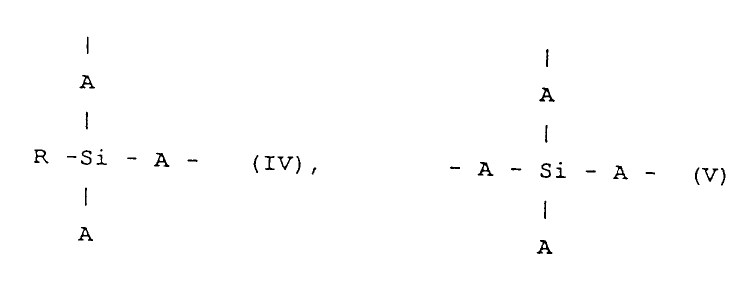 wherein
A has the above meaning and
R has the meaning hydrogen, alkyl, cycloalkyl, aryl or arylalkyl,
are produced.

16. A process for preparing polycarbosilanes according to Claim 2, characterised in that polycarbosilanes having as end groups unilaterally reacted R^{1a}R^{2a}Si(X)-, R¹'R²Si(X)- and/or R^{1b}R^{2b}Si(X)-halosilyl groups and/or Y-A-halo-hydrocarbon groups, and/or R^{1a}R^{2a}Si(OH)-, R¹'R²Si(OH)- and/or R^{1b}R^{2b}Si(OH)- and/or R^{1a}R^{2a}Si(Oalkyl)-, R¹'R²Si(Oalkyl)-and/or R^{1b}R^{2b}Si(Oalkyl)- groups which have been produced by solvolysis or chain-breaking groups are produced.

17. A process for preparing polycarbosilanes according to Claim 2, characterised in that R² stands for phenyl.

18. A process for preparing polycarbosilanes according to Claim 7, characterised in that R² and R¹' stand for phenyl.

19. A process for preparing polycarbosilanes according to Claim 8, characterised in that R^{1b} and/or R^{2b} stand for methyl, ethyl, propyl or butyl.

20. A process for preparing polycarbosilanes according to Claim 13, characterised in that polycarbosilanes, the number of structural units of which is between 30 and 150, are produced.

21. A process for preparing polycarbosilanes according to Claim 16, characterised in that polycarbosilanes having trialkylsilyl groups or C₁ - C₄-alkyl groups as chain-breaking groups are produced.

## Revendications (Revendications pour l'(les) Etat(s) contractant(s) suivant(s): AT, BE, CH, DE, FR, GB, GR, IT, NL, SE)

1. Procédé de préparation de polycarbosilanes à base de motifs structuraux de formule générale I 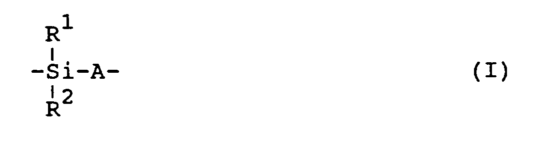 dans laquelle
R¹ représente un atome d'hydrogène ou un groupe alkyle, cycloalkyle, aryle ou arylalkyle, R¹ pouvant également avoir une signification différente dans divers motifs d'un et même polycarbosilane,
R² représente un groupe alkyle, cycloalkyle, aryle ou arylalkyle, R² pouvant également avoir une signification différente dans divers motifs d'un et même polycarbosilane, et
A représente un radical alkylène à chaîne droite ou ramifiée ou un radical cycloalkylène, A pouvant également avoir une signification différente dans divers motifs d'un et même polycarbosilane,
par la réaction d'au moins un dihalogénosilane de formule générale II 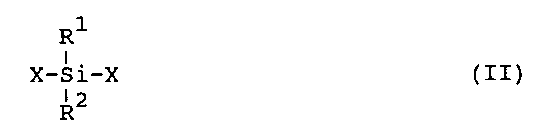 dans laquelle
R¹ et R² ont les significations données plus haut et X représente un atome d'halogène,
avec au moins un hydrocarbure dihalogéné de formule générale III
Y-A-Y (III)
dans laquelle
A a la signification donnée plus haut, et
Y représente l'atome d'halogène chlore, brome ou iode,
en présence d'un métal alcalin.

2. Polycarbosilanes à base de motifs structuraux de formules générales I' et Ib 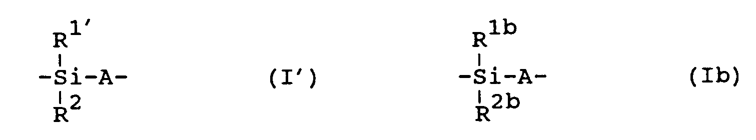 dans (I')
R¹' représentant un groupe aryle, R¹' pouvant également avoir une signification différente dans divers motifs d'un et même polycarbosilane,
R² représentant un groupe alkyle, cycloalkyle, aryle ou arylalkyle, R² pouvant également avoir une signification différente dans divers motifs d'un et même polycarbosilane, et
A représentant un radical alkylène à chaîne droite ou ramifiée ou un radical cycloalkylène, A pouvant également avoir une signification différente dans divers motifs d'un et même polycarbosilane,
et dans (Ib)
R^{1b} représentant un groupe alkyle, cycloalkyle ou arylalkyle, R^{1b} pouvant également avoir une signification différente dans divers motifs d'un et même polycarbosilane,
R^{2b} représentant un groupe alkyle, cycloalkyle ou arylalkyle, R^{2b} pouvant également avoir une signification différente dans divers motifs d'un et même polycarbosilane, et
A représentant un radical alkylène à chaîne droite ou ramifiée ou un radical cycloalkylène, A pouvant également avoir une signification différente dans divers motifs d'un et même polycarbosilane,
les motifs structuraux de formule générale Ib étant présents à raison de 50 % au maximum.

3. Polycarbosilanes selon la revendication 2, caractérisés en ce que A a la même signification dans tous les motifs structuraux du polycarbosilane.

4. Polycarbosilanes selon la revendication 2 ou 3, caractérisés en ce que le substituant R² est identique dans tous les motifs structuraux, et le substituant R¹' est identique dans tous les motifs structuraux.

5. Polycarbosilanes selon la revendication 2 ou 3, caractérisés en ce que le substituant R² est identique dans tous les motifs structuraux, le substituant R¹' est identique dans tous les motifs structuraux, le substituant R^{1b} est identique dans tous les motifs structuraux et R^{2b} est identique dans tous les motifs structuraux.

6. Polycarbosilanes selon la revendication 2, caractérisés en ce que R² représente un groupe aryle.

7. Polycarbosilanes selon la revendication 2, caractérisés en ce que les substituants R² et R^{1'} sont identiques.

8. Polycarbosilanes selon la revendication 2, caractérisés en ce que R^{1b} et/ou R^{2b} représente(nt) un groupe alkyle en C₁-C₄.

9. Polycarbosilanes selon la revendication 2, caractérisés en ce que A représente un radical alkylène en C₁-C₆ à chaîne droite ou ramifiée ou un radical cycloalkylêne en C₄-C₇.

10. Polycarbosilanes selon la revendication 9, caractérisés en ce que les radicaux alkylène en C₁-C₆ sont les radicaux méthylène, éthylène, triméthylène, propylène.

11. Polycarbosilanes selon la revendication 9, caractérisés en ce que les radicaux cycloalkylène en C₄-C₇ sont le radical cyclopentylène ou cyclohexylène.

12. Polycarbosilanes selon la revendication 2, caractérisés en ce qu'ils ont une proportion de liaison Si-Si de 5 % au maximum.

13. Polycarbosilanes selon la revendication 2, caractérisés en ce que le nombre des motifs structuraux est compris entre 10 et 500.

14. Polycarbosilanes selon la revendication 2, caractérisés par des masses moléculaires moyennes dans la plage de 580 à 300 000 g/mole.

15. Polycarbosilanes selon la revendication 2, caractérisés en ce qu'ils comportent des groupes de ramification de formules générales IV et/ou V 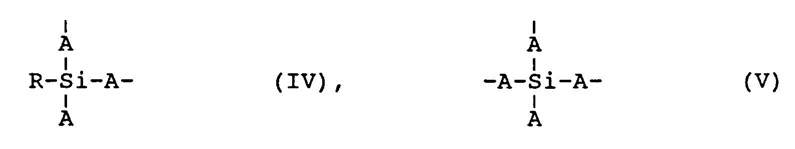 dans lesquelles
A a la signification donnée plus haut et
R représente un atome d'hydrogène ou un groupe alkyle, cycloalkyle, aryle ou arylalkyle.

16. Polycarbosilanes selon la revendication 2, caractérisés en ce qu'ils comportent, en tant que groupes terminaux, des groupes R^{1a}R^{2a}Si(X)-, R^{1'} R²Si(X)- et/ou R^{1b}R^{2b}Si(X)-halogénosilyle ayant réagi d'un côté et/ou des groupes Y-A-hydrocarbure halogéné et/ou des groupes R^{1a}R^{2a}Si(OH), R¹'R²Si(OH) et/ou R^{1b}R^{2b}Si(OH) et/ou R^{1a}R^{2a}Si(O-alkyle), R¹'R²Si(O-alkyle) et/ou R^{1b}R^{2b}Si-(O-alkyle) formés par solvolyse, ou des groupes de rupture de chaîne.

17. Polycarbosilanes selon la revendication 2, caractérisés en ce que R² représente le groupe phényle.

18. Polycarbosilanes selon la revendication 7, caractérisés en ce que R² et R¹' représentent le groupe phényle.

19. Polycarbosilanes selon la revendication 8, caractérisés en ce que R^{1b} et/ou R^{2b} représentent le groupe méthyle, éthyle, propyle ou butyle.

20. Polycarbosilanes selon la revendication 13, caractérisés en ce que le nombre des motifs structuraux est compris entre 30 et 150.

21. Polycarbosilanes selon la revendication 16, caractérisés en ce qu'ils comportent, en tant que groupes de rupture de chaîne, des groupes trialkylsilyle ou alkyle en C₁-C₄.

## Revendications (Revendications pour l'(les) Etat(s) contractant(s) suivant(s): ES)

1. Procédé de préparation de polycarbosilanes à base de motifs structuraux de formule générale I 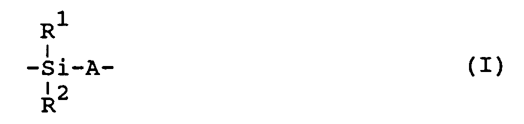 dans laquelle
R¹ représente un atome d'hydrogène ou un groupe alkyle, cycloalkyle, aryle ou arylalkyle, R¹ pouvant également avoir une signification différente dans divers motifs d'un et même polycarbosilane,
R² représente un groupe alkyle, cycloalkyle, aryle ou arylalkyle, R² pouvant également avoir une signification différente dans divers motifs d'un et même polycarbosilane, et
A représente un radical alkylène à chaîne droite ou ramifiée ou un radical cycloalkylène, A pouvant également avoir une signification différente dans divers motifs d'un et même polycarbosilane,
par la réaction d'au moins un dihalogénosilane de formule générale II 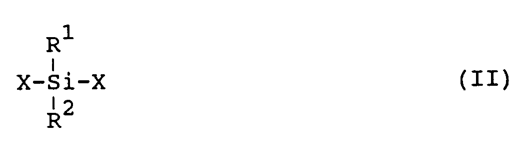 dans laquelle
R¹ et R² ont les significations données plus haut et X représente un atome d'halogène,
avec au moins un hydrocarbure dihalogéné de formule générale III
Y-A-Y (III)
dans laquelle
A a la signification donnée plus haut, et
Y représente l'atome d'halogène chlore, brome ou iode,
en présence d'un métal alcalin.

2. Procédé de préparation de polycarbosilanes selon la revendication 1, caractérisé en ce que l'on fait réagir un dihalogénosilane de formule générale II avec un hydrocarbure dihalogéné de formule générale III, pour aboutir à des polycarbosilanes à base de motifs structuraux de formules générales I' et Ib 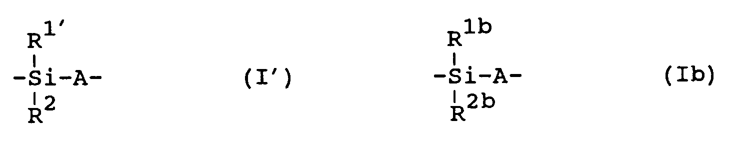 dans (I')
R¹' représentant un groupe aryle, R¹' pouvant également avoir une signification différente dans divers motifs d'un et même polycarbosilane,
R² représentant un groupe alkyle, cycloalkyle, aryle ou arylalkyle, R² pouvant également avoir une signification différente dans divers motifs d'un et même polycarbosilane, et
A représentant un radical alkylène à chaîne droite ou ramifiée ou un radical cycloalkylène, A pouvant également avoir une signification différente dans divers motifs d'un et même polycarbosilane,
et dans (Ib)
R^{1b} représentant un groupe alkyle, cycloalkyle ou arylalkyle, R^{1b} pouvant également avoir une signification différente dans divers motifs d'un et même polycarbosilane,
R^{2b} représentant un groupe alkyle, cycloalkyle ou arylalkyle, R^{2b} pouvant également avoir une signification différente dans divers motifs d'un et même polycarbosilane, et
A représentant un radical alkylène à chaîne droite ou ramifiée ou un radical cycloalkylène, A pouvant également avoir une signification différente dans divers motifs d'un et même polycarbosilane,
de manière que les motifs structuraux de formule générale Ib soient présents à raison de 50 % au maximum.

3. Procédé de préparation de polycarbosilanes selon la revendication 2, caractérisé en ce que A a la même signification dans tous les motifs structuraux du polycarbosilane.

4. Procédé de préparation de polycarbosilanes selon la revendication 2 ou 3, caractérisé en ce que le substituant R² est identique dans tous les motifs structuraux, et le substituant R^{1'} est identique dans tous les motifs structuraux.

5. Procédé de préparation de polycarbosilanes selon la revendication 2 ou 3, caractérisé en ce que le substituant R² est identique dans tous les motifs structuraux, le stubstituant R^{1'} est identique dans tous les motifs structuraux, le substituant R^{1b} est identique dans tous les motifs structuraux et R^{2b} est identique dans tous les motifs structuraux.

6. Procédé de préparation de polycarbosilanes selon la revendication 2, caractérisé en ce que R² représente un groupe aryle.

7. Procédé de préparation de polycarbosilanes selon la revendication 2, caractérisé en ce que les substituants R² et R^{1'} sont identiques.

8. Procédé de préparation de polycarbosilanes selon la revendication 2, caractérisé en ce que R^{1b} et/ou R^{2b} représente(nt) un groupe alkyle en C₁-C₄.

9. Procédé de préparation de polycarbosilanes selon la revendication 2, caractérisé en ce que A représente un radical alkylène en C₁- C₆ à chaîne droite ou ramifiée ou un radical cycloalkylène en C₄-C₇.

10. Procédé de préparation de polycarbosilanes selon la revendication 9, caractérisé en ce que les radicaux alkylène en C₁-C₆ sont les radicaux méthylène, éthylène, triméthylène, propylène.

11. Procédé de préparation de polycarbosilanes selon la revendication 9, caractérisé en ce que les radicaux cycloalkylène en C₄-C₇ sont le radical cyclopentylène ou cyclohexylène.

12. Procédé de préparation de polycarbosilanes selon la revendication 2, caractérisé en ce qu'ils ont une proportion de liaison Si-Si de 5 % au maximum.

13. Procédé de préparation de polycarbosilanes selon la revendication 2, caractérisé en ce que l'on prépare des polycarbosilanes dont le nombre des motifs structuraux est compris entre 10 et 500.

14. Procédé de préparation de polycarbosilanes selon la revendication 2, caractérisé en ce que l'on prépare des polycarbosilanes ayant des masses moléculaires moyennes dans la plage de 580 à 300 000 g/mole.

15. Procédé de préparation de polycarbosilanes selon la revendication 2, caractérisé en ce que l'on prépare des polycarbosilanes comportant des groupes de ramification de formules générales IV et/ou V 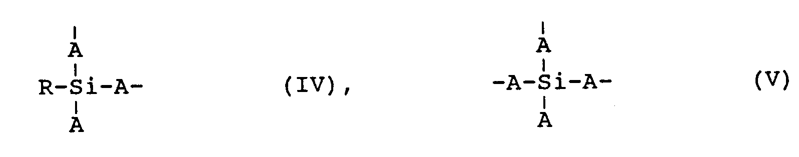 dans lesquelles
A a la signification donnée plus haut et
R représente un atome d'hydrogène ou un groupe alkyle, cycloalkyle, aryle ou arylalkyle.

16. Procédé de préparation de polycarbosilanes selon la revendication 2, caractérisé en ce que l'on prépare des polycarbosilanes comportant, en tant que groupes terminaux, des groupes R^{1a}R^{2a}Si(X)-, R^{1'}R²Si(X)- et/ou R^{1b}R^{2b}SI(X)-halogénosilyle ayant réagi d'un côté et/ou des groupes Y-A-hydrocarbure halogéné et/ou des groupes R^{1a}R^{2a}Si(OH), R^{1'}R²Si(OH) et/ou R^{1b}R^{2b}Si(OH) et/ou R^{1a}R^{2a}Si(O-alkyle), R^{1'}R²Si(O-alkyle) et/ou R^{1b}R^{2b}Si-(O-alkyle) formés par solvolyse, ou des groupes de rupture de chaîne.

17. Procédé de préparation de polycarbosilanes selon la revendication 2, caractérisé en ce que R² représente le groupe phényle.

18. Procédé de préparation de polycarbosilanes selon la revendication 7, caractérisé en ce que R² et R^{1'} représentent le groupe phényle.

19. Procédé de préparation de polycarbosilanes selon la revendication 8, caractérisé en ce que R^{1b} et/ou R^{2b} représentent le groupe méthyle, éthyle, propyle ou butyle.

20. Procédé de préparation de polycarbosilanes selon la revendication 13, caractérisé en ce que l'on prépare des polycarbosilanes dont le nombre des motifs structuraux est compris entre 30 et 150.

21. Procédé de préparation de polycarbosilanes selon la revendication 16, caractérisé en ce que l'on prépare des polycarbosilanes comportant, en tant que groupes de rupture de chaîne, des groupes trialkylsilyle ou alkyle en C₁-C₄.
